# EUROPÄISCHE PATENTANMELDUNG

(11) **EP 4 749 256 A1**
(43) Veröffentlichungstag der Anmeldung: **27.05.2026**
(21) Anmeldenummer: 25216273.0
(22) Anmeldetag: 17.11.2025
(51) Int. Cl.: G01L 19/06

(54) **WÄRMEDÄMMMEMBRAN FÜR EINEN DRUCKAUFNEHMER, DRUCKAUFNEHMER MIT WÄRMEDÄMMMEMBRAN, UND HERSTELLUNG EINES DRUCKAUFNEHMERS MIT WÄRMEDÄMMMEMBRAN**

(30) Priorität: 21.11.2024 EP 24214645
(71) Anmelder: Kistler Holding AG, 8408 Winterthur (CH)
(72) Erfinder: Mastrogiacomo, Giovanni, 8005 Zürich (CH); Märki, Hans Beat, 8483 Kollbrunn (CH); Schmid, Christian Martin, 8400 Winterthur (CH); Rodrigo, Ricardo, 8400 Winterthur (CH)

(57) **Zusammenfassung**

Die Erfindung betrifft eine Wärmedämmmembran (2) für einen Druckaufnehmer (1) zur Ermittlung eines Druckes eines fluiden Mediums (F) aufweisend eine Membran (3) und eine Beschichtung (5), wobei eine Membranoberfläche (6) der Membran (3) bei Verwendung der Wärmedämmmembran (2) dem fluiden Medium (F) zugewandt ist. Die Beschichtung (5) weist eine lamellenartige Struktur (7) auf, wobei für eine Mehrzahl der Lamellen (9) eine Längsausdehnung (DL) der Lamelle (9) normal zur Membranebene (XY) höchstens die Hälfte einer Querausdehnung (DQ) der Lamelle (9) parallel zur Membranebene (XY) beträgt.

## Beschreibung

### Technisches Gebiet

Die Erfindung betrifft eine Wärmedämmmembran für einen Druckaufnehmer, Druckaufnehmer mit Wärmedämmmembran, und Herstellung eines Druckaufnehmers mit Wärmedämmmembran. Eine Wärmedämmmembran weist eine Membran und eine Beschichtung auf.

### Stand der Technik

Eine Membran trennt ein fluides Medium in einem ersten Raum von einem zweiten Raum ab. Im Bereich der Druckmesstechnik weisen Druckaufnehmer oft eine Membran auf, welche eine Messanordnung, beispielsweise eine Messanordnung, vom fluiden Medium, beispielsweise einem gasförmigen und/oder flüssigen Messmedium dessen Druck ermittelt werden soll, trennt. Eine Membran weist dabei üblicherweise eine Membranoberfäche auf, welche dem fluiden Medium zugewandt ist.

Im Fall eines Druckaufnehmers wird der auf den Bereich der Membran wirkende Druck des fluiden Mediums möglichst verlustfrei an eine Messanordnung weitergeleitet. Dabei kann die Messanordnung direkt an der dem fluiden Medium abgewandten Seite der Membran angeordnet sein oder durch ein weiteres Element mit der Membran in Wirkverbindung stehen, beispielsweise durch einen festen Stempel oder ein fluides Medium oder ein Gel, welche den Druck oder eine proportionale Kraft auf die Messanordnung übertragen.

Wird ein Aufnehmer in Umgebungen mit heissen fluiden Medien eingesetzt, beispielsweise in einer Brennkraftmaschine oder Brennöfen oder Schmelzöfen oder in Anwendungen mit Prozesswärme wie chemische und industrielle Prozesse etc., so können hohe Temperaturen die Messanordnung schädigen. Dabei wird Wärmeenergie des fluiden Mediums durch die Membran zur Messanordnung eingetragen und kann dieses zerstören oder zumindest die Ermittlung eines Druckes behindern. Viele piezoelektrische Messanordnungen weisen beispielsweise einen pyroelektrischen Effekt auf, der neben der mechanisch hervorgerufenen piezoelektrischen Ladungstrennung eine weitere , pyroelektrische Ladungstrennung hervorruft, die unvorteilhaft die Druckermittlung verfälscht. Die Höhe der Temperatur, die für eine Messanordnung schädigend wirkt, hängt dabei von der Art der Messanordnung ab. Abhilfe kann durch ein weit entferntes Anordnen der Messanordnung erfolgen, beispielsweise durch einen sehr lange Stempel oder eine lange hydraulische Leitung zur Druckübertragung. Solche Lösungen erfordern jedoch unverhältnismässig viel Platz. Zudem beeinflusst ein langer Stempel oder eine lange hydraulische Leitung die Eigenfrequenz des Aufnehmers.

Insbesondere auftretende Temperaturspitzen können eine Messanordnung schädigen.

Die EP0145146A2 zeigt einen Drucksensor mit einer Membran, deren Membranoberfläche einem fluiden Medium in einem Verbrennungsbereich zugewandt ist und sich als Reaktion auf die Höhe des angrenzenden Drucks durchbiegt. Eine zweite Membran ist von der ersten Membran beabstandet und biegt sich in Abhängigkeit von der Durchbiegung der ersten Membran durch. Die zweite Membran ist so ausgelegt, dass sie ein Signal erzeugt, das die Durchbiegung der zweiten Membran anzeigt. Ein Kraftübertragungsmittel bzw. Druckübertragungsmittel, das entweder eine Flüssigkeit oder ein Stempel zwischen der ersten und der zweiten Membran sein kann, überträgt die Bewegung der ersten Membran auf die zweite Membran und reduziert die Wärmeübertragung von der ersten Membran auf die zweite Membran durch eine grosse geometrische Beabstandung. Nachteilig ist hierbei, dass der Drucksensor wesentlich grössere Dimensionen aufweist als ein entsprechender Sensor ohne erste Membran und Kraftübertragungsmittel.

Aufgabe der Erfindung ist es eine Membran derart zu verbessern, dass die erwähnten Nachteile verringert werden. Es ist eine weitere Aufgabe der Erfindung eine Membran bereitzustellen, die den Eintrag von Wärmeenergie durch die Membran verzögert.

### Darstellung der Erfindung

Die Aufgabe wird durch die Merkmale der unabhängigen Ansprüche gelöst.

Die Erfindung betrifft eine Wärmedämmmembran für einen Druckaufnehmer zur Ermittlung eines Druckes eines fluiden Mediums in einem ersten Raum; wobei die Wärmedämmmembran eingerichtet ist den ersten Raum von einem zweiten Raum zu trennen. Die Wärmedämmmembran ist weitgehend parallel einer Membranebene ausgeführt. Die Membranebene ist durch eine erste Raumachse und eine zweite Raumachse gegeben. Die erste Raumachse und zweite Raumachse sind linear unabhängig und bilden ein zweidimensionales Koordinatensystem. Eine dritte Raumachse ist normal zur Membranebene angeordnet. Die erste Raumachse und zweite Raumachse und dritte Raumachse bilden ein dreidimensionales Koordinatensystem. Die Wärmedämmmembran weist eine Membran und eine Beschichtung auf. Bei Verwendung der Wärmedämmmembran ist eine Membranoberfläche der Membran dem fluiden Medium zugewandt. An der Membranoberfläche ist eine Beschichtung angeordnet.

Die Beschichtung weist erfindungsgemäss eine lamellenartige Struktur auf. Für eine Mehrzahl der Lamellen beträgt eine Längsausdehnung der Lamelle normal zur Membranebene höchstens die Hälfte einer Querausdehnung der Lamelle parallel zur Membranebene. Dadurch ist das Quer-Längs-Verhältnis der Lamelle mindestens 2, wobei die Quer-Richtung eine Richtung parallel zur Membranebene ist und die LängsRichtung parallel zur dritten Raumachse ist.

Unter einer lammellenartigen Struktur wird eine Struktur verstanden, die mehrheitlich Lamellen aufweist. Eine Lamelle ist ein flach ausgeführter Partikel mit einem Quer-Längs-Verhältnis der Lamelle von mindestens 2, der von anderen Lamellen mehrheitlich durch eine Begrenzung, beispielsweise eine Kavität, von anderen Lamellen getrennt ist. Eine Kavität weist beispielsweise einen oder mehrere Hohlräume oder einen oder mehrere Zwischenräume zwischen den Lamellen auf. Die Beschichtung kann demnach als ein Hybridmaterial aufweisend Kavitäten und Lamellen bezeichnet werden.

Mehrheitlich Lamellen aufweisend bedeutet, dass mindestens 50% der Partikel in Form einer Lamelle vorliegt. Mehrheitlich getrennt bedeutet, dass die Lamellen an mehr als 50% ihrer Oberfläche von anderen Lamellen durch eine Begrenzung getrennt sind, wobei Lamellen untereinander jedoch zumindest teilweise stoffschlüssige und/oder kraftschlüssige und/oder formschlüssige Verbindungen aufweisen können. Der Begriff «und/oder» ist als nicht-ausschließende Disjunktion, auch «inklusives Oder» genannt, verstanden. In einer lamellenartigen Struktur sind Lamellen übereinander derart geschichtet, dass die Lamellen mit ihrer längeren Ausdehnung weitestgehend parallel angeordnet sind. Weitestgehend parallel ist dabei als eine Abweichung der Richtung der längeren Ausdehnung der Lamellen von weniger als 30° zu verstehen.

Die lamellenartige Struktur zeichnet sich dabei vorteilhaft durch eine geringe Wärmeleitfähigkeit aus, die mindestens 50% geringer ist als die Wärmeleitfähigkeit der beschichteten Membran. Wärmeleitfähigkeit wird dabei normiert auf eine Längeneinheit betrachtet und wird in der Einheit W·(mK)⁻¹ (Watt pro Meter und pro Kelvin)angegeben. Die Wärmeleitfähigkeit wird dabei nicht für eine einzelne Schicht angegeben, sondern bezieht sich auf einen makroskopischen Körper.

Durch das Hybridmaterial breitet sich Wärme in einer lamellenartigen Struktur vornehmlich entlang der längeren Ausdehnung der Lamelle aus. Das Hybridmaterial mit einer lamellenartigen Struktur weist daher eine richtungsabhängige Wärmeleitfähigkeit auf, welche Wärme besser entlang der längeren Ausdehnung der Lamellen leitet als entlang der geringeren Ausdehnung. Das Hybridmaterial weist insgesamt in jeder Richtung jedoch eine wesentlich geringere Wärmeleitfähigkeit auf als ein Festkörper aus dem gleichen Material wie die Lamellen. Unter einem Festkörper wird dabei ein Körper verstanden, der eine gleiche chemische Zusammensetzung wie eine Lamelle aufweist, jedoch keine lamellenartige Struktur mit Kavitäten.

Eine Wärmedämmmembran, also eine Membran, welche auf ihrer dem fluiden Medium zugewandten Membranoberfläche eine Beschichtung mit lamellenartiger Struktur aufweist, weist daher einen langsameren Wärmeeintrag zur dem fluiden Medium abgewandten Seite der Membran auf als eine unbeschichtete Membran gleichen Materials und Dimension. Dadurch schützt die Membran die dem fluiden Medium abgewandten Seite der Membran längere Zeit vor hohen Temperaturen, welche Elemente auf der dem fluiden Medium abgewandten Seite der Membran schädigen können. Dies verlängert die Lebensdauer dieser Elemente gegenüber einer unbeschichteten Membran, beispielsweise Messanordnungen wie piezoelektrische Kristalle oder Keramiken, piezoresistive Materialien oder Dehnungsmessstreifen, aber auch Elektronikbauteile, Isolatoren oder andere Elemente, die insbesondere in Drucksensoren verbaut sind. Zudem werden unerwünschte Temperaturabhängigkeiten von Messsignalen vermindert, wie sie beispielsweise durch den pyroelektrischen Effekt mancher piezoelektrischen Messelemente gegeben sind. Die Beschichtung mit lamellenartiger Struktur schützt ebenfalls das Material der Membran selbst vor Temperaturspitzen. Auch der Wärmeeintrag in die Membran selbst wird also durch die Beschichtung vorteilhafterweise verlangsamt.

Die Beschichtung mit lamellenartige Struktur ist dabei flexibler als ein entsprechender Festkörper desselben Materials. Dadurch kann die Beschichtung für flexible Elemente, wie eine Membran für einen Drucksensor, genutzt werden, ohne dass die Flexibilität der Wärmedämmmembran wesentlich verringert wäre, insbesondere im Vergleich zu einer Membran, welche eine Schicht gleicher Schichtdicke eines Festkörpers aus demselben Material aufweisen würde. Bevorzugt ist der Elastizitätsmodul der Beschichtung und der Elastizitätsmodul der Membran in der gleichen Grössenordnung.

Vorteilhafterweise sind die Lamellen weitestgehend voneinander getrennt. Die Beschichtung weist Kavitäten auf. Kavitäten sind Hohlräume bzw. Zwischenräume oder Risse/Mikrorisse, die eine Ausdehnung von mindesten 0.2 µm aufweisen und zumindest teilweise Lamellen voneinander begrenzen. Eine Kavität kann Luft oder ein anderes fluides Medium enthalten oder auch eine andere chemische Materialzusammensetzung als eine Lamelle aufweisen. Die Trennung ist zumindest teilweise durch Kavitäten in der Beschichtung ausgeführt. Die Kavitäten trennen dabei einzelne Lamellen voneinander, sodass eine Wärmeleitung von einer Lamelle zur nächsten Lamelle verringert ist gegenüber einem entsprechenden Festkörper.

Eine Wärmedämmmembran ist, wie bei Membranen für Drucksensoren üblich, üblicherweise ein entlang der Membranebene flach ausgeführtes Element. Eine dritte Achse normal zur Membranebene wird auch als Längsachse bezeichnet. Die lamellenartige Struktur der Beschichtung zeichnet sich dadurch aus, dass die Mehrzahl der Lamellen flach ausgeführt ist. Die projizierte Querausdehnung (Ausdehnung entlang der Querrichtung, also parallel zur Membranebene) der flachen Lamelle auf die Membranebene ist so mindestsens das Zweifache der projizierten Längsausdehnung der Lamelle auf die dritte Achse (Längsachse). Querausdehung und Längsausdehnung werden dabei nach ASTM E 3 (Standard Guide for Preparation of Metallographic Specimens) in Verbindung mit einer Mikroskopie-Technik wie beispielsweise Lichtmikroskopie, Rasterelektronienmikroskopie (REM) oder ähnlichem bestimmt.

Eine solche Beschichtung kann vorteilhafterweise durch ein thermisches Spritzverfahren aufgetragen sein. Bei thermischen Spritzverfahren treffen thermisch zumindest teilweise aufgeschmolzene Partikel eines Materials auf eine Membranoberfläche auf, wodurch sie mechanisch flach verformt als Lamellen auf der Membranoberfläche bzw. auf vorher bereits aufgetragenen Lamellen erstarren. Durch auftragen der zumindest teilweise aufgeschmolzenen Partikel auf bereits erstarrte Lamellen erfolgt keine umfassende stoffschlüssige Verbindung, sondern auch eine kraftschlüssige/formschlüssige Verbindung, die sich durch Kavitäten wie Zwischenräume oder Hohlräume, die die Lamellen mehrheitlich voneinander trennen, ausbildet. Entsprechend verlaufen die Kavitäten vornehmlich parallel zur Membranebene. Die Partikel haben eine Partikelgrösse zwischen 5 µm und 120 µm, wobei die Partikelgrösse mittels Laserbeugung bestimmt wird.

Insbesondere wird unter thermischen Spritzen das Plasmaspritzen nach DIN EN ISO 14917:2017 Thermal spraying - Terminology, classification (ISO 14917:2017) verstanden.

Vorteilhafterweise ist die Membran aus einem metallischen Werkstoff ausgeführt. Metallische Werkstoffe weisen üblicherweise eine intrinsisch höhere Temperaturbeständigkeit auf. Besonders vorteilhaft ist die Membran aus einer Nickel- oder Kobaltbasislegierung ausgeführt, wie es für Drucksensoren zur Ermittlung von hohen Temperaturen üblich ist. Die Membran weist dabei besonders vorteilhaft einen Chromgehalt von mehr als 15 Gew.% (15 Gewichtsprozent) auf.

Die Beschichtung weist vorteilhafterweise eine Beschichtungsdicke von mindestens 100 µm auf. Die Beschichtungsdicke, also die Schichtdicke der Beschichtung, kurz Dicke, wird normal zur Membranebene bestimmt. Allgemein wird die Beschichtungsdicke einer Beschichtung normal zur beschichteten Oberfläche verstanden. Eine solche Beschichtung verlangsamt den Wärmeeintrag in den dem fluiden Medium abgewandten Seite, also in den zweiten Raum gegenüber einer unbeschichteten identischen Membran um mindestens 10%.

In einer Ausführungsform der Wärmedämmmembran weist die Beschichtung einen metallischen Werkstoff auf, bevorzugt eine nickelbasierte Self-Fluxing-Legierung. Die nickelbasierte Self-Fluxing-Legierung und äquivalente Self-Fluxing-Legierungen im Bereich des thermischen Spritzens sind in der DIN EN ISO 14920:2015 beschrieben. Bevorzugt ist die Beschichtung aus Nickel, Chrom, Silizium und Bor ausgeführt, besonders bevorzugt nach der Verhältnisformel in Gewichtsprozent (Empirische Formel) Ni₇₆Cr₁₅Si₅B₄ ausgeführt. Alternativ weist die Beschichtung eine Nickellegierung mit dem Hauptbestandteil Nickel und einem hohen Anteil an Oxidbildnern wie Aluminium, Chrom und Yttrium oder eine Kobaltlegierung mit dem Hauptbestandteil Kobalt und einem hohen Anteil an Oxidbildnern wie Aluminium, Chrom und Yttrium auf.

In einer weiterein, alternativen Ausführungsform der Wärmedämmmembran weist die Beschichtung einen keramischen Werkstoff auf, bevorzugt yttriumoxidstabilisiertes Zirkonoxid. Yttriumoxidstabilisiertes Zirkonoxid weist dabei mindestens 90 Gew % Zirconiumoxid (ZrO₂) und 6 Gew% bis 8 Gew% Yttriumoxid Y₂O₃ auf.

Alternativ kann die Beschichtung einer Wärmedämmmembran auch einen oben erwähnten metallischen Werkstoff und einen oben erwähnten keramischen Werkstoff aufweisen. Die kann beispielsweise dadurch gefertigt werden, dass sowohl Partikel aus dem metallischen Werkstoff als auch Partikel aus dem keramischen Werkstoff zumindest teilweise aufgeschmolzen auf die zu beschichtende Oberflächen, kurz Beschichtungsoberfläche, auftreffen und dort erstarren.

Bevorzugt ist in einer Ausführungsform der Wärmedämmmembran eine Haftvermittlerschicht zwischen Membranoberfläche und Beschichtung angeordnet. Die Haftvermittlerschicht weist eine Nickel- und/oder Kobalt- und/oder Eisen-basierte Legierungen auf, wobei die Nickel- und/oder Kobalt- und/oder Eisen-basierte Legierungen Zusatzelemente mit einer hohen Affinität zu Sauerstoff aufweisen, wie beispielsweise Aluminium und Refraktärmetalle. Die molare Standardbildungsenthalpie (Standard Enthalpy of Formation of Solid Oxides at 298.15 K and 1 atm) der Zusatzelemente müssen eine hohen Affinität zu Sauerstoff kleiner als -150 kJ/mol aufweisen. Die molare Standardbildungsenthalpie und Affinität zu Sauerstoff richtet sich dabei nach den Publizierten Angaben aus Boettinger, W. , Kattner, U. , Moon, K. and Perepezko, J. (2006), NIST Recommended Practice Guide: DTA and Heat-Flux DSC Measurements of Alloy Melting and Freezing, Elsevier, Kidlington. Die Haftvermittlerschicht wird beispielsweise durch thermisches Spritzen aufgebracht und weist eine weitgehend anisotrope Struktur auf. Die Haftvermittlerschicht ist vorteilhaft, da eine Haftung der Beschichtung mit ihrer lamellenartigen Struktur verbessert ist gegenüber einer Wärmedämmmembran, bei der die Beschichtung direkt auf die Membran aufgebracht ist. Durch die Haftvermittlerschicht kann beispielsweise die Abweichung der Wärmeausdehungskoeffizienten zwischen Wärmedämmschicht und Membran reduziert werden.

Bevorzugt weist die Membran einen thermischen Längenausdehnungskoeffizienten, kurz Membranausdehnungskoeffizienten, im Temperaturbereich von 20°C und 100°C von 8·10⁻⁶ K⁻¹ bis 15·10⁻⁶ K⁻¹ auf. Ebenso bevorzugt weicht ein thermischer Längenausdehnungskoeffizienten der Beschichtung, kurz Beschichtungsausdehnungskoeffizient weniger als 40% vom Membranausdehnungskoeffizient ab. Dies ist vorteilhaft, da stark unterschiedliche Längenausdehnungskoeffizienten grösser 40% zu hohen Spannungen zwischen Membran und Beschichtung führen, insbesondere wenn die Membran stark unterschiedlichen Temperaturen ausgesetzt ist, beispielsweise bei Lagerung im Vergleich zur Verwendung in Hochtemperaturanwendungen. Spannungen können zu Abplatzungen der Beschichtung führen und die Wärmedämmung der Wärmedämmmembran so negativ beeinflussen bzw. die Wärmedämmungsmembran schädigen. Eine Angleichung der Membranausdehnungskoeffizienten an den Beschichtungsausdehnungskoeffizient mit maximal 40% Abweichung ist daher vorteilhaft für die Temperaturbeständigkeit der Beschichtung.

Vorteilhafterweise weist die Beschichtung eine Wärmeleitfähigkeit in der Membranebene auf, sowie eine Wärmeleitfähigkeit senkrecht zur Membranebene auf. Die Wärmeleitfähigkeit in der Membranebene ist bevorzugt grösser ist als die Wärmeleitfähigkeit senkrecht zur Membranebene. So wird neben der verringerten Wärmeleitfähigkeit durch Kavitäten der lamellenartigen Struktur der Wärmeeintrag in den zweiten Raum auch dadurch verlangsamt, dass die Wärmeenergie vornehmlich seitwärts entlang der Membranebene abgeleitet wird und schlechter entlang der Längsachse zur Membran geleitet wird.

Allgemein weist ebenfalls die Membran eine Wärmeleitfähigkeit auf. Die Wärmeleitfähigkeit der Membran ist grösser ist als jede Wärmeleitfähigkeit der Beschichtung.

Die Erfindung betrifft ebenfalls einen Aufnehmer zur Ermittlung eines Drucks eines fluiden Mediums. Der Aufnehmer weist eine Ausführungsform einer beschriebenen Wärmedämmmembran auf. Der Aufnehmer weist ein dem fluiden Medium zugewandtes druckseitiges Ende auf. Der Aufnehmer weist ein Gehäuse auf. Der Aufnehmer weist zudem eine Messanordnung auf. Das fluide Medium übt einen Druck auf die Wärmedämmmembran aus, welche in Wirkverbindung mit der Messanordnung steht. Die Wärmedämmmembran verlangsamt einen Wärmeeintrag aus dem fluiden Medium in einen Innenraum des Gehäuses, welches üblicherweise der zweite Raum ist, den die Membran vom ersten Raum mit dem fluiden Medium trennt.

Vorteilhafterweise ist die Wärmedämmmembran an einem druckseitigen Ende des Aufnehmers angeordnet, welches dem fluiden Medium zugewandt ist. Die Messanordnung ist hermetisch vom fluiden Medium durch die Wärmedämmmembran getrennt. Dies ist vorteilhaft durch eine stoffschlüssige Verbindungen von Gehäuse und Wärmedämmmembran ausgeführt. Das Gehäuse kann zumindest teilweise eine Gehäusebeschichtung aufweisen, welche gleich der Beschichtung der Wärmedämmmembran ausgeführt ist und in diese übergeht. Dies hat den Vorteil, dass auch ein Wärmeeintrag durch das Gehäuse in den zweiten Raum, bzw. durch Teile des Gehäuses, die dem fluiden Medium zugewandt sind, verlangsamt wird. Die Beschichtung wird dabei, mutatis mutandis, auf eine Gehäuseoberflache aufgebracht. Eine Haftvermittlerschicht kann, analog zur entsprechenden Ausführungsform der Wärmedämmmembran, vorgängig auf eine Gehäuseoberfläche aufgebracht sein.

Ein erfindungsgemässer Aufnehmer wird beispielsweise hergestellt, indem zumindest folgende Schritte ausgeführt werden. Die Herstellung ist dabei jedoch nicht auf die angeführte Herstellungsweise beschränkt und kann insbesondere auch durch andere Techniken als Thermisches Spritzen erfolgen, beispielsweise durch 3D Drucktechniken, Laserauftragsschweissen, usw..

Die Herstellung eines Aufnehmers umfassend eine Wärmedämmmembran weist zumindest folgende Teilschritte auf: Bereitstellen eines Gehäuses aufweisend eine Membran, welche Membran an einem druckseitigen Ende des Aufnehmers angeordnet ist. Bestimmen einer Beschichtungsoberfläche, wobei die Beschichtungsoberfläche zumindest die Membranoberfläche umfasst. Die Beschichtungsoberfläche kann vorgängig je nach Oberflächenbeschaffenheit durch Sandstrahlen, Glasperlstrahlen oder ähnliche Verfahren aufgeraut werden. Aufbringen einer Beschichtung auf die Beschichtungsoberfläche mittels thermischen Spritzen. Metallische oder keramische Partikel werden in Richtung der Beschichtungsoberfläche bewegt. Die Partikel sind zumindest teilweise geschmolzen und treffen im zumindest teilweise geschmolzenen Zustand auf die Beschichtungsoberfläche auf. Die Partikel werden durch ihre kinetische Energie beim Auftreffen lammellenförmig verformt. Die Partikel erstarren mehrheitlich lamellenförmig und bilden Lamellen der lammellenartigen Struktur der Beschichtung.

Optional kann Herstellung eines Aufnehmers umfassend eine Wärmedämmmembran auch einen Schritt umfassen, in dem die Beschichtungsoberfläche zumindest teilweise eine Oberfläche des Gehäuses, kurz Gehäuseoberfläche, umfasst.

Optional kann Herstellung eines Aufnehmers umfassend eine Wärmedämmmembran auch einen Schritt umfassen, in dem die Beschichtungsoberfläche vorrangig zumindest teilweise mit einer Haftvermittlerschicht versehen wird, wobei die Haftvermittlerschicht mit der Haftvermittlerschicht der entsprechenden Ausführungsform der Wärmedämmmembran übereinstimmt.

### Kurze Beschreibung der Zeichnungen

Im Folgenden wird die Erfindung beispielhaft unter Beizug der Figuren näher erklärt. Es zeigen
- Fig. 1: zeigt eine schematische Ansicht eines Aufnehmers mit Wärmedämmmembran;
- Fig. 2: zeigt eine schematische Schnittansicht eines Aufnehmers mit einer ersten Ausführungsform einer Wärmedämmmembran;
- Fig. 3: zeigt eine schematische Schnittansicht eines Aufnehmers mit einer weiteren Ausführungsform einer Wärmedämmmembran;
- Fig. 4: zeigt eine schematische Schnittansicht eines Aufnehmers mit einer weiteren Ausführungsform einer Wärmedämmmembran;
- Fig. 5: zeigt eine schematische Schnittansicht eines Aufnehmers mit einer weiteren Ausführungsform einer Wärmedämmmembran;
- Fig. 6: zeigt ein Detail A einer Ausführungsform nach Fig. 2 oder Fig. 3 einer Wärmedämmmembran;
- Fig. 7: zeigt ein Detail B einer Ausführungsform nach Fig. 4 oder Fig. 5 einer Wärmedämmmembran,
- Fig. 8: zeigt ein Detail C einer Wärmedämmmembran,
- Fig. 9: zeigt eine schematische Darstellung einer Herstellung einer Wärmedämmmembran,
- Fig. 10: zeigt ein Detail B nach Fig. 4 oder Fig. 5 einer weiteren Ausführungsform einer Wärmedämmmembran;
- Fig. 11: zeigt eine schematische Schnittansicht eines Aufnehmers mit einer weiteren Ausführungsform einer Wärmedämmmembran;
- Fig. 12: zeigt eine schematische Schnittansicht eines Aufnehmers mit einer weiteren Ausführungsform einer Wärmedämmmembran.

### Wege zur Ausführung der Erfindung

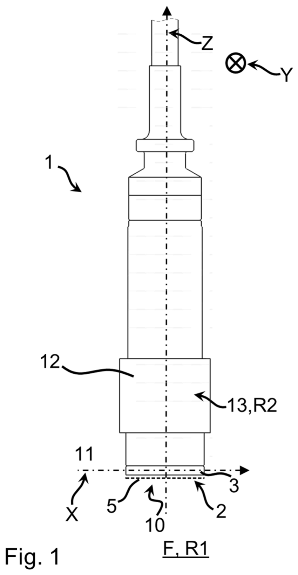

Fig. 1 zeigt eine schematische Darstellung eines Aufnehmers 1 mit Wärmedämmmembran 2. Der Aufnehmer 1 ist eingerichtet einen Druck des fluiden Mediums F im ersten Raum R1 zu ermitteln. Der Aufnehmer 1 weist ein dem fluiden Medium F zugewandtes druckseitiges Ende 10 auf. Weiter weist der Aufnehmer 1 ein Gehäuse 12 auf. Innerhalb des Aufnehmers und in Fig. 1 nicht sichtbar weist der Aufnehmer 1 eine Messanordnung 13 auf. Die Messanordnung ist im zweiten Raum R2 innerhalb des Gehäuses 12 angeordnet. Am druckseitigen Ende 10 ist die Wärmedämmmembran 2 angeordnet. Der Aufnehmer erstreckt sich längs der dritten Achse Z, auch als Längsachse Z bezeichnet. Die Wärmedämmmembran 2 ist weitgehend parallel der Membranebene XY ausgeführt, wobei die Membranebene XY durch die erste Raumachse X und eine zweite Raumachse Y gegeben ist, welche zweite Raumachse sich in die Zeichenebene erstreckt. Die Wärmedämmmembran ist als Membran 3 aufweisend eine Beschichtung 5 (gestrichelt dargestellt) dargestellt.

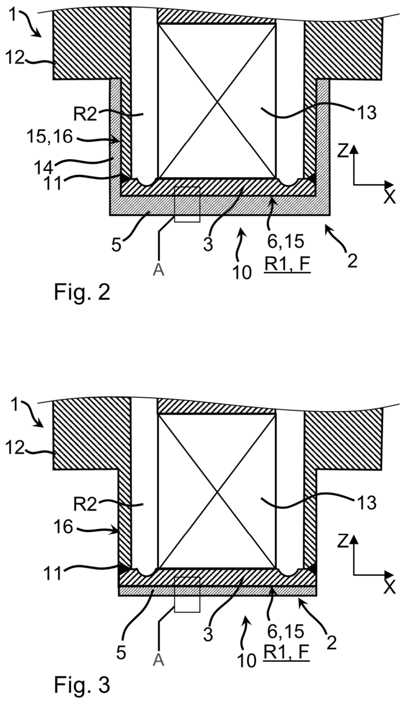

Fig. 2 stellt ein Detail eines Aufnehmers 1 in einer schematischen Schnittansicht mit einer ersten Ausführungsform einer Wärmedämmmembran 2 dar. Die Wärmedämmmembran 2 weist eine Membran 3 und eine Beschichtung 5 auf. Die Membranoberfläche 6 der Membran 3 ist bei Verwendung der Wärmedämmmembran 2 bzw. des Aufnehmers 1 dem fluiden Medium F zugewandt. Die Beschichtung 5 ist an der Membranoberfläche 6 angeordnet.

Alle in den Figuren gezeigten Ausführungsformen sind schematische Darstellungen. Dimensionen, insbesondere Dicken, Beschichtungsdicken, Längen, usw. sind lediglich zur besseren Sichtbarkeit gewählt und sind nicht als Angaben zur Dimensionierung von Elementen, auch nicht zur Dimensionierung von Elementen im Verhältnis zueinander, zu verstehen.

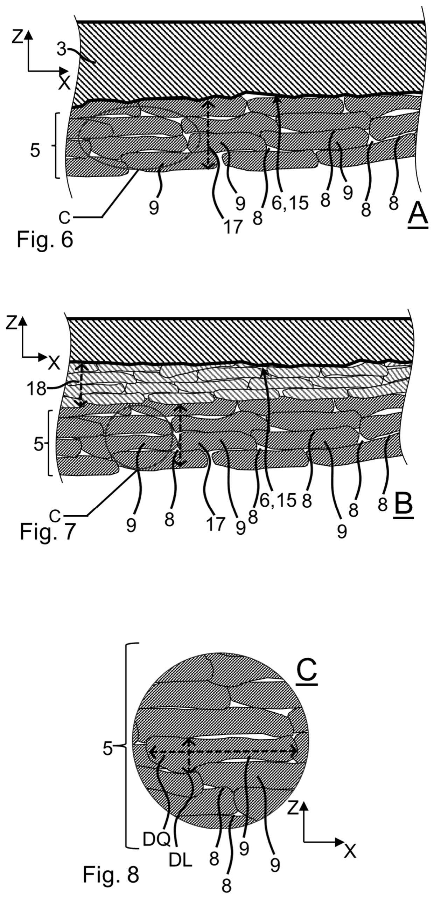

Fig. 2 zeigt eine schematische Schnittansicht des Aufnehmers 1 mit einer ersten Ausführungsform der Wärmedämmmembran 2. Die schematische Schnittansicht zeigt einen Schnitt einer Teilansicht des Aufnehmers 1 aus Fig. 1 entlang der ersten Achse X und der dritten Achse Z. Im Gehäuse 12 ist die Messanordnung 13 im zweiten Raum R2 angeordnet. Eine Messanordnung weist beispielsweise einen, mit einer Membran 3 in Wirkverbindung stehenden, piezoelektrischen Kristall oder eine piezoelektrische Keramik, oder anderes piezoresistives Material oder Dehnungsmessstreifen auf, welche bei Kraftbeaufschlagung bzw. Druckbeaufschlagung ein messbares elektrisches Signal aufweisen. Die Wärmedämmmembran 2 weist eine Membran 3 und eine Beschichtung 5 auf. Die Membran 3 ist, wie bei Aufnehmern 1 üblich, am druckseitigen Ende 10 des Aufnehmers 1 angeordnet und mit dem Gehäuse 12 des Aufnehmers verbunden, beispielsweise mittels einer stoffschlüssigen Verbindung 11 wie einer Schweissverbindung, einer Lötverbindung oder ähnlichem. Die Membran 3 kann jedoch auch einstückig mit dem Gehäuse 12 ausgeführt sein und die Erfindung beschränkt sich keineswegs auf eine zweiteilige Ausführung sonders schliesst explizit eine einstückige Zusammenstellung von Membran 3 und Gehäuse 12 mit ein. Die Wärmedämmmembran 2 ist eingerichtet einen Druck eines fluiden Mediums F im ersten Raum R1 auf die Messanordnung 13 zu übertragen. Die Wärmedämmmembran 2 steht daher in Wirkverbindung mit der Messanordnung 13. Die Beschichtung 5 erstreckt sich in dieser Ausführungsform sowohl auf die Membran 2 als auch auf Teile des Gehäuses 12 und geht nahtlos von der Membran 2 auf Teile des Gehäuses über. Es versteht sich, dass Lamellen 9, wie sie in Fig. 6 und 8 gezeigt sind, jeweils mit ihrer längeren Querausdehnung DQ weitgehend parallel zur beschichteten Oberfläche 15 ausgerichtet sind, und damit beim Übergang von der Membranoberfläche 6 auf die Oberfläche des Gehäuses 12 die räumliche Ausrichtung der Querausdehnung sich ändert. Während die Querausdehnung der Lamellen 9 auf der Membranoberfläche weitgehend parallel zur ersten Achse X und zweiten Achse Y (normal zur Zeichenebene in Fig. 2) sind, ist die Querausdehnung der Lamellen 9 der Beschichtung des Gehäuses 12 weitgehend parallel zur dritten Achse Z.

In dieser und folgenden Ausführungsformen der Wärmedämmmembran 2 zeigen gleiche Bezugszeichen in den Ausführungsformen identische Elemente an.

Fig. 3 zeigt eine schematische Schnittansicht eines Aufnehmers 1 mit einer weiteren Ausführungsform einer Wärmedämmmembran 2. Die Ausführungsform weicht von der Ausführungsform der Fig. 2 nur durch die Beschichtung 5 ab. In dieser Ausführungsform der Fig. 3 erstreckt sich die Beschichtung 5 auf die Membranoberfläche 6. Das Gehäuse 12 weist keine Beschichtung auf. Dies ist insbesondere vorteilhaft für Frontdichtende Aufnehmer, bei denen das fluide Medium bei Benutzung des Aufnehmers 1 nicht oder nur zu einem geringen Teil mit dem Gehäuse 12 in Kontakt ist.

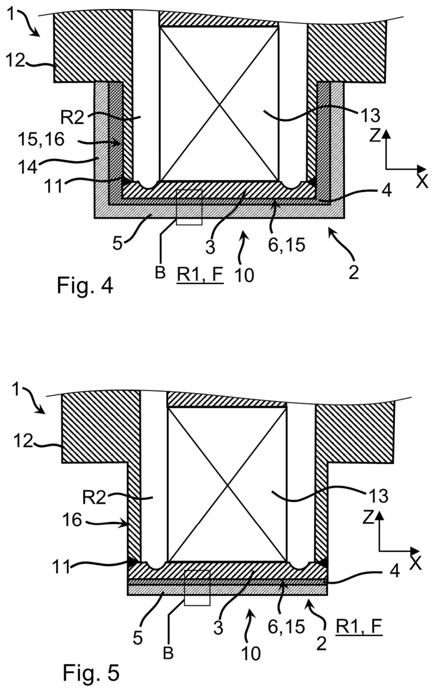

Fig. 4 zeigt eine schematische Schnittansicht eines Aufnehmers 1 mit einer weiteren Ausführungsform einer Wärmedämmmembran 2. Auch in dieser Ausführungsform der Wärmedämmmembran 2 zeigen gleiche Bezugszeichen gleiche Elemente wie in den bisher gezeigten Ausführungsformen. In dieser Ausführungsform ist zwischen Beschichtung 5 und Membran eine zusätzliche Haftvermittlerschicht 4 aufgebracht. Die Haftvermittlerschicht 4 verbessert die Haftung der Beschichtung 5 zu der Membran 2. Die Haftvermittlerschicht 4 ist optional und kann aus ökonomischen Gründen entfallen, wenn die Haftung der Beschichtung 5 zur Membran 2 für die jeweilige Anwendung ausreichend ist. In dieser Ausführungsform erstreckt sich die Haftvermittlerschicht 4 sowohl auf die Membranoberfläche 6 als auch auf die Gehäuseoberfläche 16. Die Haftvermittlerschicht 4 ist somit zwischen Beschichtungsoberfläche 6, 15 und Beschichtung 5 angeordnet.

Fig. 5 zeigt eine schematische Schnittansicht eines Aufnehmers 1 mit einer weiteren Ausführungsform einer Wärmedämmmembran 2. Auch in dieser Ausführungsform der Wärmedämmmembran 2 zeigen gleiche Bezugszeichen gleiche Elemente wie in den bisher gezeigten Ausführungsformen der Fig. 2 bis Fig. 4. Die Ausführungsform der Fig. 5 weicht von der Ausführungsform der Fig. 4 nur durch die Beschichtung 5 und Haftvermittlerschicht 4 ab. In dieser Ausführungsform der Fig. 5 erstrecken sich sowohl Haftvermittlerschicht 4 als auch Beschichtung 5 auf die Membranoberfläche 6. Das Gehäuse 12 weist keine Beschichtung auf. Dies ist, analog zur Ausführungsform der Wärmedämmmembran 2 aus Fig. 3, insbesondere vorteilhaft für frontdichtende Aufnehmer, bei denen das fluide Medium bei Benutzung des Aufnehmers 1 nicht oder nur zu einem geringen Teil mit dem Gehäuse 12 in Kontakt ist.

Fig. 6 zeigt schematisch ein Detail A der Beschichtung 5, welches sowohl schematisch die Beschichtung 5 für die Ausführungsform der Wärmedämmmembran 2 nach Fig. 2 als auch die Ausführungsform der Wärmedämmmembran 2 nach Fig. 3 zeigt. Dementsprechend ist der Ausschnitt des Detail A sowohl Fig. 2 als auch Fig. 3 eingezeichnet. In Fig. 6 und 8 dargestellte Lamellen 9 sind auf der Membran 3 angeordnet. Es wird darauf hingewiesen, dass es sich um eine schematische Darstellung handelt und weder die Anzahl der Lamellen 9 noch die Querausdehnung DQ oder Längsausdehnung DL noch deren Verhältnis zueinander eine Beschränkung darstellt. Erfindungsgemäss ist das Verhältnis Querausdehnung DQ/Längsausdehnung DL der Mehrheit der Lamellen 9 mindestens 2. Die Beschichtung 5 weist Kavitäten 8 auf, welche die Lamellen 9 zueinander weitgehend begrenzen. Die Beschichtung 5 ist in einer Beschichtungsdicke 17 dargestellt, welche normal zur Beschichtungsfläche und ab der Membran 3 gemessen ist.

Fig. 7 zeigt schematisch ein Detail B der Beschichtung 5, welches sowohl schematisch die Beschichtung 5 für die Ausführungsform der Wärmedämmmembran 2 nach Fig. 4 als auch die Ausführungsform der Wärmedämmmembran 2 nach Fig. 5 zeigt. Dementsprechend ist der Ausschnitt des Detail B sowohl Fig. 4 als auch Fig. 5 eingezeichnet. In Fig. 7 und 8 dargestellte Lamellen 9 sind auf der Membran 3 angeordnet. Es wird darauf hingewiesen, dass es sich um eine schematische Darstellung handelt und weder die Anzahl der Lamellen 9 noch die Querausdehnung oder Längsausdehnung noch deren Verhältnis zueinander eine Beschränkung darstellt. Erfindungsgemäss ist das Verhältnis Querausdehnung DQ/Längsausdehnung DL der Mehrheit der Lamellen mindestens 2. Die Beschichtung 5 weist Kavitäten 8 auf, welche die Lamellen 9 zueinander weitgehend begrenzen. Kavitäten 8 sind beispielsweise Hohlräume 8 bzw. Zwischenräume 8, wie schematisch in Fig. 7 dargestellt. Zwischen Beschichtung 5 und Membran 3 ist die Haftvermittlerschicht 4 angeordnet. Die Darstellung der Haftvermittlerschicht 4 und der Kavitäten 8 ist ebenfalls schematisch und soll weder eine Dimension noch ein Grössenverhältnis zu Membran 3 oder Lamellen 9 darstellen. In der Darstellung der Fig. 7 weist die Haftvermittlerschicht 4 ebenfalls eine lamellare Struktur auf. Die Haftvermittlerschicht 4 kann ebenfalls über thermisches Spritzen analog zur Beschichtung 5 aufgebracht sein und sich lediglich in ihrem Material von der Beschichtung 5 unterscheiden. Die rein schematische Darstellung der Fig. 7 erlaubt hierbei explizit keinen Aufschluss über Grössenverhältnisse. Die Beschichtung 5 ist in einer Beschichtungsdicke 17 dargestellt, welche normal zur Beschichtungsfläche und ab der Haftvermittlerschicht 4 gemessen ist. Als Beschichtungsdicke 17 wird die mittlere Dicke der Beschichtung 5 verstanden. Die Haftvermittlerschichtdicke 18 ist analog zur Beschichtungsdicke 17 gemessen und durch gleiche Verfahren bestimmbar.

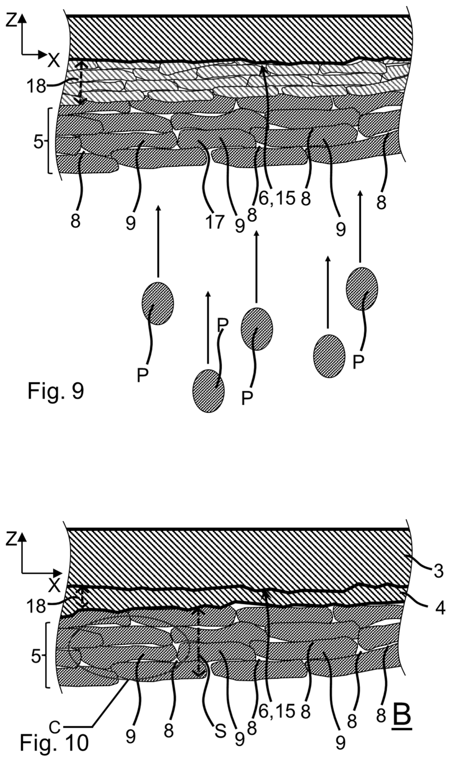

Eine alternative Haftvermittlerschicht ist in der Fig. 10 schematisch dargestellt. Die Haftvermittlerschicht weist keine lamellare Struktur auf und kann beispielsweise durch Bedampfung, andere Techniken der physikalischen Gasphasenabscheidung oder durch Laserauftragschweissen aufgebracht sein oder durch Sintern von thermisch aufgespritzen Schichten aus selbstfliessenden Legierungen erzeugt sein.

Es wird darauf hingewiesen, dass selbstverständlich zwischen Haftvermittlerschicht 4 und Membran 3 der in den Fig. 4, Fig. 5, Fig. 7 und Fig. 10 auch mindestens eine weitere Schicht angeordnet sein kann. Die Haftvermittlerschicht 4 muss keineswegs in direktem Kontakt mit der Membran 3 ausgeführt sein.

Fig. 8 zeigt schematisch ein Detail C der Beschichtung 5, welches sowohl schematisch die Beschichtung 5 für alle Ausführungsformen der Wärmedämmmembran 2 nach Fig. 6 als auch die Ausführungsform der Wärmedämmmembran 2 nach Fig. 7 zeigt. Dementsprechend ist der Ausschnitt des Detail C sowohl Fig. 6 als auch Fig. 7 eingezeichnet. Fig. 8 zeigt schematisch, wie die Längsausdehnung DL der Lamellen 9 und die Querausdehnung DQ zu ermitteln sind. Fig. 8 zeigt die Lamellen 9 der lammelenartigen Beschichtung 5 in einer Schnittansicht. Die Querausdehnung DQ der Lamellen 9 ist jedoch in jeder Richtung parallel der Membranebene XY weitgehend gleich. Die Lamellen 9 haben eine weitgehend oblate Formgebung mit der Querausdehnung DQ als längere Ausdehnung. Die Längsausdehnung DL wird dabei senkrecht zur Beschichtungsoberfläche 15 ermittelt. Die Querausdehnung DQ wird dabei parallel zur Beschichtungsoberfläche 15 ermittelt. Ist die Beschichtung 5 auf der Membranoberfläche 6 angeordnet, ggf. mit zwischenliegender Haftvermittlerschicht 4, so ist die Querausdehnung parallel zur Membranebene XY und die Längsausdehnung parallel zur dritten Achse Z, auch Längsachse Z genannt.

Die Haftvermittlerschicht 4 der in Fig. 7 dargestellten Ausführungsform ist weitgehend analog zur Beschichtung 5 der Fig. 8 ausgeführt und unterscheidet sich vornehmlich in der Materialwahl.

Für alle dargestellten Ausführungsformen ist die die Mehrzahl der Lamellen 9 flach ausgeführt, sodass die projizierte Querausdehnung DQ der flachen Lamelle 9 auf die Membranebene XY mindestsens das Zweifache der projizierten Längsausdehnung DL der Lamelle auf die dritte Achse Z, kurz Längsachse Z ist.

In allen dargestellten Ausführungsformen der Wärmedämmmembran 2 weist die Beschichtung 5 eine Beschichtungsdicke 17 von mindestens 100 µm auf. Die Beschichtungsdicke 17 der Beschichtung 5 ist normal zur Beschichtungsoberfläche 15 gemessen. Bei einer Beschichtung 5 der Membranoberfläche 5 ist dies normal zur Membranebene XY, bei einer Beschichtung des Gehäuses 12 entsprechend normal zur jeweiligen Gehäuseoberfläche 16.

Die Beschichtung 5 aller dargestellten Ausführungsformen der Wärmedämmmembran 2 kann durch ein thermisches Spritzverfahren aufgetragen sein, wie es in Fig. 9 schematisch gezeigt ist.

Die Herstellung des Aufnehmers 1 mit einer Wärmedämmmembran nach einer der beschriebenen Ausführungsformen weist mindestens folgende Teilschritte auf, welche teilweise in Fig. 9 schematisch dargestellt sind. Fig. 9 zeigt eine bereitgestellte Membran 3, welche Membran 3 an einem druckseitigen Ende 10 (nicht gezeigt, analog zu Fig. 1) des Aufnehmers 1 (nicht gezeigt, analog zu Fig. 1) angeordnet ist. Es ist die Beschichtungsoberfläche 15 bestimmt, welche in diesem exemplarischen Beispiel zumindest die Membranoberfläche 6 umfasst. Die Beschichtung 5 wird auf die Beschichtungsoberfläche 15 mittels thermischen Spritzen aufgetragen, wobei metallische oder keramische Partikel P in Richtung der Beschichtungsoberfläche 15 bewegt werden, wie durch die Pfeile an den Partikeln P dargestellt. Die Partikel P sind zumindest teilweise geschmolzen und treffen im zumindest teilweise geschmolzenen Zustand auf die Beschichtungsoberfläche 15 auf. Die Partikel P verformen sich durch ihre kinetische Energie beim Auftreffen lammellenförmig und erstarren mehrheitlich lamellenförmig und bilden Lamellen 9 der lammellenartigen Struktur 7 der Beschichtung 5.

Die in dieser Schrift offenbarten Ausführungsformen der Wärmedämmmembran 2 sind selbstverständlich miteinander kombinierbar. Es sind explizit in dieser Schrift auch Ausführungsformen einbezogen, welche eine Kombination der Merkmale hierin beschriebener Ausführungsformen aufweisen.

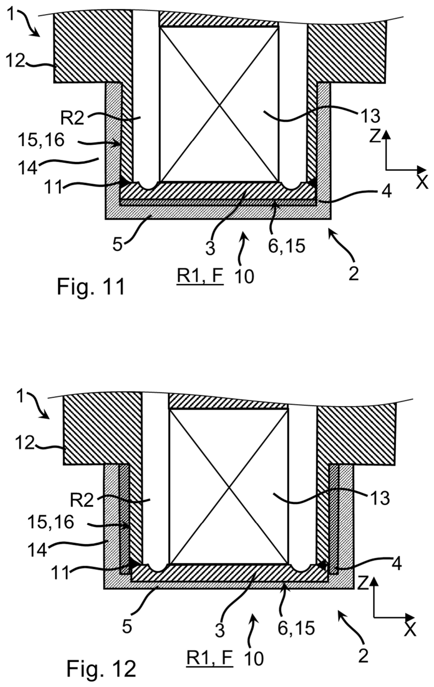

Insbesondere ist auch eine Ausführungsform eines Aufnehmers 1 mit Wärmedämmmembran 2 möglich, bei der eine Haftvermittlerschicht 4 zwischen Membran 3 und Beschichtung 5 angeordnet ist, aber bei der keine Haftvermittlerschicht 4 zwischen Gehäuse 12 bzw. Gehäuseoberflache 16 und Beschichtung 5 angeordnet ist, wie in Fig. 11 schematisch dargestellt. Alternativ ist auch eine Ausführungsform eines Aufnehmers 1 mit Wärmedämmmembran 2 möglich, bei der eine Haftvermittlerschicht 4 zwischen Gehäuse 12 bzw. Gehäuseoberflache 16 und Beschichtung 5 angeordnet ist, aber bei der keine Haftvermittlerschicht 4 zwischen Membran 3 und Beschichtung 5 angeordnet ist, wie in Fig. 12 schematisch dargestellt.

### Bezugszeichenliste

- 1: Aufnehmer, Druckaufnehmer
- 2: Wärmedämmmembran
- 3: Membran
- 4: Haftvermittlerschicht
- 5: Beschichtung
- 6: Membranoberfläche
- 7: Lammellenartige Struktur
- 8: Kavität, Hohlraum, Zwischenraum
- 9: Lamelle
- 10: Druckseitiges Ende
- 11: Stoffschlüssige Verbindung
- 12: Gehäuse
- 13: Messanordnung, Aufnehmer
- 14: Gehäusebeschichtung
- 15: Beschichtungsoberfläche
- 16: Gehäuseoberfläche
- 17: Beschichtungsdicke, Schichtdicke, Dicke
- 18: Haftvermittlerschichtdicke
- DQ: Querausdehnung
- DL: Längsausdehnung
- F: Fluides Medium
- P: Partikel
- R1: Erster Raum
- R2: Zweiter Raum
- X: Erste Raumachse, erste Querachse
- XY: Membranebene
- Y: Zweite Raumachse, zweite Querachse
- Z: Dritte Raumachse, Längsachse

## Patentansprüche

1. Wärmedämmmembran (2) für einen Druckaufnehmer (1) zur Ermittlung eines Druckes eines fluiden Mediums (F) in einem ersten Raum (R1); wobei die Wärmedämmmembran (2) eingerichtet ist den ersten Raum (R1) von einem zweiten Raum (R2) zu trennen; wobei die Wärmedämmmembran (2) weitgehend parallel einer Membranebene (XY) ausgeführt ist; welche Membranebene (XY) durch eine erste Raumachse (X) und eine zweite Raumachse (Y) gegeben ist; wobei eine dritte Raumachse (Z) normal zur Membranebene (XY) angeordnet ist; wobei die Wärmedämmmembran (2) eine Membran (3) und eine Beschichtung (5) aufweist; wobei eine Membranoberfläche (6) der Membran (3) bei Verwendung der Wärmedämmmembran (2) dem fluiden Medium (F) zugewandt ist; wobei eine Beschichtung (5) and der Membranoberfläche (6) angeordnet ist; **dadurch gekennzeichnet, dass** die Beschichtung (5) eine lamellenartige Struktur (7) aufweist; dass die Beschichtung Lamellen (9) aufweist und dass für eine Mehrzahl der Lamellen (9) eine Längsausdehnung (DL) der Lamelle (9) normal zur Membranebene (XY) höchstens die Hälfte einer Querausdehnung (DQ) der Lamelle (9) parallel zur Membranebene (XY) ist.

2. Wärmedämmmembran (2) nach dem vorgehenden Anspruch; **dadurch gekennzeichnet, dass** die Beschichtung Kavitäten (8), beispielsweise in Form von Hohlräumen (8), aufweist; dass die Lamellen (9) weitestgehend voneinander getrennt sind; wobei die Trennung zumindest teilweise durch Kavitäten (8) in der Beschichtung (5) ausgeführt ist.

3. Wärmedämmmembran (2) nach einem der vorgehenden Ansprüche, **dadurch gekennzeichnet, dass** die Mehrzahl der Lamellen (9) flach ausgeführt ist; sodass die projizierte Querausdehnung (DQ) der flachen Lamelle (9) auf die Membranebene (XY) mindestsens das Zweifache der projizierten Längsausdehnung (DL) der Lamelle auf die dritte Achse (Z), kurz Längsachse (Z) ist.

4. Wärmedämmmembran (2) nach einem der vorgehenden Ansprüche, **dadurch gekennzeichnet, dass** die Beschichtung (5) durch ein thermisches Spritzverfahren aufgetragen ist.

5. Wärmedämmmembran (2) nach einem der vorgehenden Ansprüche, **dadurch gekennzeichnet, dass** die Membran (3) aus einem metallischen Werkstoff ausgeführt ist; oder dass die Membran (3) aus einer Nickel- oder Kobaltbasislegierung ausgeführt ist, wobei die Membran (3) einen Chromgehalt von mehr als 15 Gew.% aufweist.

6. Wärmedämmmembran (2) nach einem der vorgehenden Ansprüche, **dadurch gekennzeichnet, dass** die Beschichtung (5) eine Beschichtungsdicke (17), kurz Dicke (17), von mindestens 100 µm aufweist; wobei die Beschichtungsdicke (17) der Beschichtung (5) normal zur Membranebene (XY) ist.

7. Wärmedämmmembran (2) nach einem der vorgehenden Ansprüche, **dadurch gekennzeichnet, dass** die Beschichtung (5) einen metallischen Werkstoff aufweist, bevorzugt eine nickelbasierte Self-Fluxing-Legierung oder eine Nickellegierung mit einem hohen Anteil an Oxidbildnern wie Aluminium, Chrom und Yttrium oder eine Kobaltlegierung mit einem hohen Anteil an Oxidbildnern wie Aluminium, Chrom und Yttrium.

8. Wärmedämmmembran (2) nach einem der vorgehenden Ansprüche, **dadurch gekennzeichnet, dass** die Beschichtung (5) einen keramischen Werkstoff aufweist, beispielsweise ein yttriumoxidstabilisiertes Zirkonoxid; oder dass die Beschichtung (5) einen metallischen Werkstoff und einen keramischen Werkstoff aufweist.

9. Wärmedämmmembran (2) nach einem der vorgehenden Ansprüche, **dadurch gekennzeichnet, dass** eine Haftvermittlerschicht (4) zwischen Membranoberfläche (6) und Beschichtung (5) angeordnet ist; dass die Haftvermittlerschicht (4) eine Nickel- und/oder Kobalt- und/oder Eisen-basierte Legierungen aufweist; wobei die Nickel- und/oder Kobalt- und/oder Eisen-basierte Legierungen Zusatzelemente mit einer hohen Affinität zu Sauerstoff aufweist, wie beispielsweise Aluminium und Refraktärmetalle; wobei die Standardbildungsenthalpie der Zusatzelemente eine hohen Affinität zu Sauerstoff kleiner als -150 kJ/mol aufweisen muss.

10. Wärmedämmmembran (2) nach einem der vorgehenden Ansprüche, **dadurch gekennzeichnet, dass** die Membran (2) einen thermischen Längenausdehnungskoeffizienten, kurz Membranausdehnungskoeffizienten, im Temperaturbereich von 20°C und 100°C von 8·10⁻⁶ K⁻¹ bis 15·10⁻⁶ K⁻¹ aufweist; dass die Beschichtung (5) einen thermischen Längenausdehnungskoeffizienten, kurz Beschichtungsausdehnungskoeffizient aufweist; und dass der Beschichtungsausdehnungskoeffizient weniger als 40% vom Membranausdehnungskoeffizient abweicht.

11. Wärmedämmmembran (2) nach einem der vorgehenden Ansprüche, **dadurch gekennzeichnet, dass** die Beschichtung (5) eine Wärmeleitfähigkeit in der Membranebene (XY) aufweist; dass die Beschichtung (5) eine Wärmeleitfähigkeit senkrecht zur Membranebene (XY) aufweist; und dass die Wärmeleitfähigkeit in der Membranebene (XY) grösser ist als die Wärmeleitfähigkeit senkrecht zur Membranebene (XY).

12. Wärmedämmmembran (2) nach einem der vorgehenden Ansprüche, **dadurch gekennzeichnet, dass** die Beschichtung (5) eine Wärmeleitfähigkeit in der Membranebene (XY) aufweist; dass die Beschichtung eine Wärmeleitfähigkeit senkrecht zur Membranebene (XY) aufweist; dass die Membran (3) eine Wärmeleitfähigkeit aufweist; und dass die Wärmeleitfähigkeit der Membran (3) grösser ist als jede Wärmeleitfähigkeit der Beschichtung (5).

13. Aufnehmer (1) zur Ermittlung eines Drucks eines fluiden Mediums (F); wobei der Aufnehmer (1) ein dem fluiden Medium (F) zugewandtes druckseitiges Ende (10) umfasst; wobei der Aufnehmer (1) ein Gehäuse (12) aufweist; wobei der Aufnehmer (1) eine Messanordnung (13) aufweist; **dadurch gekennzeichnet, dass** der Aufnehmer (1) eine Wärmedämmmembran (2) nach einem den vorgehenden Ansprüche aufweist.

14. Aufnehmer (1) nach dem vorgehenden Anspruch; **dadurch gekennzeichnet, dass** die Wärmedämmmembran (2) am druckseitigen Ende (11) des Aufnehmers (1) angeordnet ist und die Messanordnung (13) hermetisch vom fluiden Medium (F) trennt; dass Gehäuse (12) und Wärmedämmmembran (2) mit einer stoffschlüssigen Verbindungen (11) verbunden sind; wobei das Gehäuse (12) zumindest teilweise eine Gehäusebeschichtung (14) aufweist, welche gleich der Beschichtung (5) der Wärmedämmmembran (2) ausgeführt ist und in diese übergeht.

15. Herstellung eines Aufnehmers (1) nach einem der Ansprüche 13 oder 14; wobei die Herstellung zumindest folgende Teilschritte aufweist; bereitstellen eines Gehäuses (12) aufweisend eine Membran (3), welche Membran (3) an einem druckseitigen Ende (10) des Aufnehmers (1) angeordnet ist; bestimmen einer Beschichtungsoberfläche (15); wobei die Beschichtungsoberfläche (15) zumindest die Membranoberfläche (6) umfasst; Aufbringen einer Beschichtung (5,14) auf die Beschichtungsoberfläche (15) mittels thermischen Spritzen, wobei metallische oder keramische Partikel (P) in Richtung der Beschichtungsoberfläche (15) bewegt werden; wobei die Partikel (P) zumindest teilweise geschmolzen sind; wobei die Partikel (P) im zumindest teilweise geschmolzenen Zustand auf die Beschichtungsoberfläche (15) auftreffen; wobei die Partikel (P) durch ihre kinetische Energie beim Auftreffen lammellenförmig verformt werden; wobei die Partikel (P) mehrheitlich lamellenförmig erstarren und Lamellen (9) der lammellenartigen Struktur (7) der Beschichtung bilden.
